# EUROPEAN PATENT APPLICATION

(11) **EP 2 743 880 A1**
(43) Date of publication of application: **18.06.2014**
(21) Application number: 13195775.5
(22) Date of filing: 05.12.2013
(51) Int. Cl.: G06Q 40/00

(54) **Business management system and method with predefined alerts**

(30) Priority: 12.12.2012 US 201213710744
(71) Applicant: AXSLogic Pte Ltd., 139951 Singapore (SG)
(72) Inventor: Baskaran, Hari, 139951 Singapore (SG); Dalai, Tushar Ranjan, Sunnyvale, CA 94088 (US)
(74) Representative: Zaboliene, Reda

(57) **Abstract**

A system and method for managing a consumer financial services business, including predefined alerts and reports. The system includes a database module, having dimension tables and fact tables, structured to contain data related to the consumer financial services business. An alert module is predefined to alert a user to conditions of importance to a consumer financial services business, and a report module, linked to the database module. The method predefines business alert conditions to identify alert conditions regarding information required by specific users of information in a consumer financial services business

## Description

### BACKGROUND

This application deals generally with the field of business management systems, and more specifically with business management systems providing business intelligence, analytics with automated reports and early warning alert functionality.

Business management systems have become generally ubiquitous. Although such systems can be specialized to a given industry, such as solutions aimed specifically at manufacturing plants, or process-oriented systems aimed at operation such as refineries, general management systems appear in practically every type of company including consumer banking, financial services, insurance, and telecom enterprises.

Many management systems attempt to address problems that appear across an entire enterprise. Such systems, such as those produced and sold by SAP AG, of Waldorf, Germany, offer core functionality, with customized modules available. Such systems require extensive, and expensive, customization work to suit them to a particular industry, much less a specific company. At the end of the customization process, a company may have a system offering considerable functionality, but flexibility may be lost in that process. Moreover, the fact that the basic functionality of the system was designed for a "standard" company necessarily limits the suitability of such systems for a specific industry.

The art has attempted to address these problems by piecing together specialized smaller systems to arrive at an overall solution. Interfaces between such systems, however, often prove more problematic in practice than the theory suggests. The very complexity of modem business enterprises often defeats attempts to provide solutions that combine the power of broadly-based management systems with the flexibility of industry-specific solutions.

Thus, there remains a widespread need for business management systems tailored to a particular industry area.

### SUMMARY

An aspect of the present disclosure is a business management system for managing a consumer financial services business. The management system includes a database module, an alert module, and a report module. The database module includes two types of tables, dimension tables, and fact tables. Dimension tables are structured to contain data related to the consumer financial services business including product-specific dimension tables, dimension tables, snowflake dimension tables, and static dimension tables. The fact tables are also structured to contain data related to the consumer financial services business, including application status tables, application tables, daily account transaction snapshot tables, and account transaction snapshot aggregate tables. The disclosure further includes an alert module, predefined to alert a user to conditions of importance to a consumer financial services business, and a report module, predefined to report conditions of importance to a consumer financial services business.

A further aspect of the present disclosure is a method for generating alerts in the operation of the business management system for managing a consumer financial services business. The method includes predefining business alert conditions, including identifying user roles, together with critical information required by users in such roles; identifying product categories involved with the critical information; identifying subject matter involved with the critical information; and identifying alert conditions regarding the critical information. During operation of the system, the alert-generating method monitors the system to determine whether any alert conditions are met. Upon finding that an alert condition is met, the system activates a corresponding predefined to notify a user. Upon request from the user, the system generates a report linked to the alert.

### BRIEF DESCRIPTION OF THE DRAWINGS

The drawing figures described below set out and illustrate a number of exemplary embodiments of the disclosure. Throughout the drawings, like reference numerals refer to identical or functionally similar elements. The drawings are illustrative in nature and are not drawn to scale.
**FIG. 1** is a block diagram illustrating the overall structure of the system of the present disclosure.
**FIG. 2** is a flow diagram illustrating the data flow of an embodiment of the system of the present disclosure.
**FIG. 3** is a diagram illustrating the data structure of the dimension tables employed in some embodiments of the present disclosure.
**FIG. 4** is a diagram illustrating the data structure of the fact tables employed in some embodiments of the present disclosure.
**FIG. 5** is a flowchart illustrating a process for alert definition and activation employed in some embodiments of the present disclosure.
**FIGS. 6-9** are screenshots depicting features of the alert subsystem of the present disclosure.
**FIGS. 10-15** are screenshots depicting features of the report subsystem of the present disclosure.

### DETAILED DESCRIPTION

The following detailed description is made with reference to the figures. Exemplary embodiments are described to illustrate the subject matter of the disclosure, not to limit its scope, which is defined by the appended claims.

### Overview

The present disclosure sets out a business management system easily tailored to a particularly environment, including the ability to identify and pre-define alerts, together with reports linked to the alerts. At a first level, alerts and reports are configured for specific roles within the business. Within the scope of a given role, alerts/reports can then be more specifically tied to particular products or subsets of the overall business. Then, the specific subject of a given alert can be set out, together with the specific condition that triggers the alert generation. Alerts provide only notification that a specific condition has arisen; linking an alert to a report allows a user easily to drill down to the level of detail required to understand the alert in exactly the desired granularity.

The data structure supporting the system of the present disclosure is arranged in the manner of a data warehouse, including dimension tables and fact tables. Dimension tables contain the attributes by which a given business activity is measured, while fact tables contain specific information about those dimensions.

This disclosure presents exemplary embodiments of the present disclosure in terms of a banking enterprise. Thus, the overall corporate structure of an organization employing the systems discussed here may include a number of branch banks. Other aspects of such an organization may extend to a regional headquarters or aggregating facilities, as well as a central headquarters, where overall corporate data are compiled. It will be understood that this use of a banking system is entirely exemplary in nature. The principles set out here are applicable to a number of industries, and those having skill in the art will appreciate the ease of applying the general principles set out here to other industrial areas.

### Exemplary Embodiments

### System operation

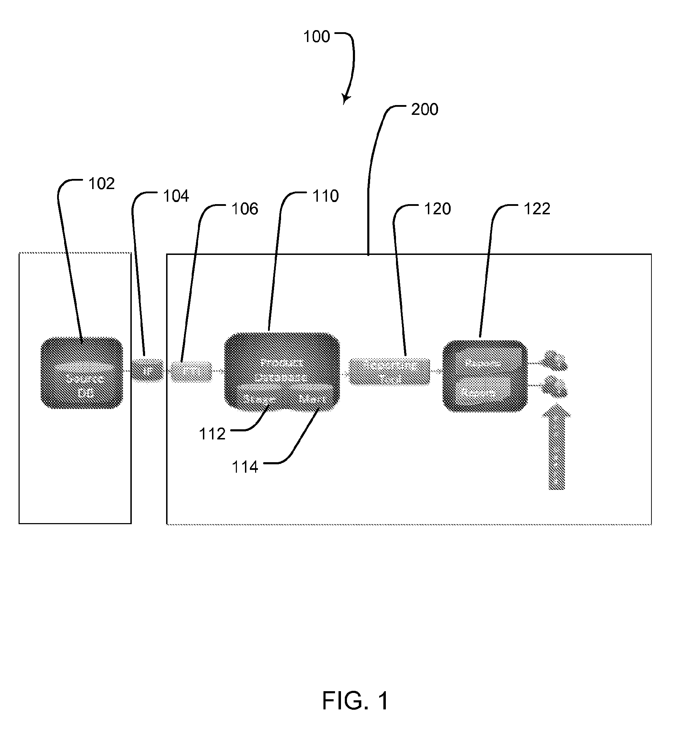

FIG.1 depicts a business management system 100 including a business platform 200 according to some embodiments of the present disclosure. In general, business management system 100 is built around a source database 102. The database can be a large enterprise-scale database or data warehouse system, exemplified by system such as SQL Server DB, DB2, Oracle DB, Datastage, ODI, Informatica, Cognos, Oracle BI And the like. Such systems are generally structured to accept an interface file which consists of the data elements which in turn will be provided by the consumer banking and financial services clients through their data directly from original sources. Thus, sales data may flow from sources such as branch banks, which in turn may receive data from specific business areas within a bank, such as individual banking, business banking, loans, etc. Moreover, a regional or higher headquarters may receive data from entirely disparate operating units. Thus, the entities reporting to a regional center may include branch banks, mortgage brokers, mortgage initiators, and credit card issuers.

An interface layer 104 may stand between the source database 102 and business platform 200. This module loads source data into formats of more direct functionality for users, facilitating the generation of some types of reports. It should be noted that interface layer 104 may take a number of forms and be positioned in several places, as discussed in more detail below.

Business platform 200 embodies the teachings of the present disclosure. A primary component includes a product database 110 and a reports/alert module 122. As generally understood in the art, data is loaded into a data warehouse system through a process that extracts, transforms, and loads the data. The process operates in a module generally referred to as an ETL module. Here, both the general format of incoming data and the desired form of data to be loaded are known, and the ETL module performs any required conversion. Such modules are well known in the art and will not be discussed further here.

Product database 110 stores data in a staging area 112 and data mart 114. Once the source data is prepared, as specified in a data mapping document, the data is pushed by the source system to the interface layer 104. If the data is provided as source files, it is then read by business platform 200 and loaded to the interface tables within interface layer 104, after which the data processing and calculations of the data are done in the staging area 112. Data is then loaded to the DataMart 114, from which the application fetches data for reporting and generating alerts. The product database 110 processes the data in the stage area 112 and stores the data in the data mart 114. Equipment for implementing these modules is known in the art, such as a combination of a database (e.g. DB2, SQL Server DB or Oracle Database), an ETL tool (e.g. Datastage, ODI, or Informatica) and a BI tool (OBIEE or Cognos). Structures for the data carried within product database 110 are discussed in detail below.

Reporting/alert module 122 includes a reporting tool 120 and the reporting/alert module 122. Although a number of possible structures can be employed here, the preferred structure, illustrated in the drawing, employs a module for generating the report format and content, coupled to a device for storing pre-generated reports for rapid dissemination. It will readily be understood that planning for reports and alerts requires careful analysis of the business enterprise. The important task here is determining what information a manager and her team will require in the course of managing the business. No a priori rules are possible here, because each business situation is different. Even within the same business, different sections or operating units may well require varying information. What can be noted, however, is that experienced and skilled managers understand their information requirements, and those requirements can be input into the reporting tool 120. At that point, reporting tool 120 can locate the required data from product database 110. Reports, configured to display data in a specific form using the team's knowledge and skills, can be maintained in skeleton form in the reporting/alert module 122. Because these reports bypass the report definition and creation step, they can be rendered very rapidly.

Reports and alerts are very closely related. Reports are collections of data, selected and formatted to help managers understand a business situation. Alerts also pertain to business information required by a manager, but the alert only conveys notice that a problem exists, based on predefined criteria. It acts as an early warning trigger for the manager. Conversely, the lack of an alert in an area specified by the system signifies positive business growth or improvement in that area to the extent that there is no early warning for that aspect. Thus, a natural progression of events would call for the system to dispatch an alert to a manager, who then requests further detail, as contained in a report. For ease of generation and access, the present disclosure combines the reporting and alert functionality in a single module, reporting/alert module 122.

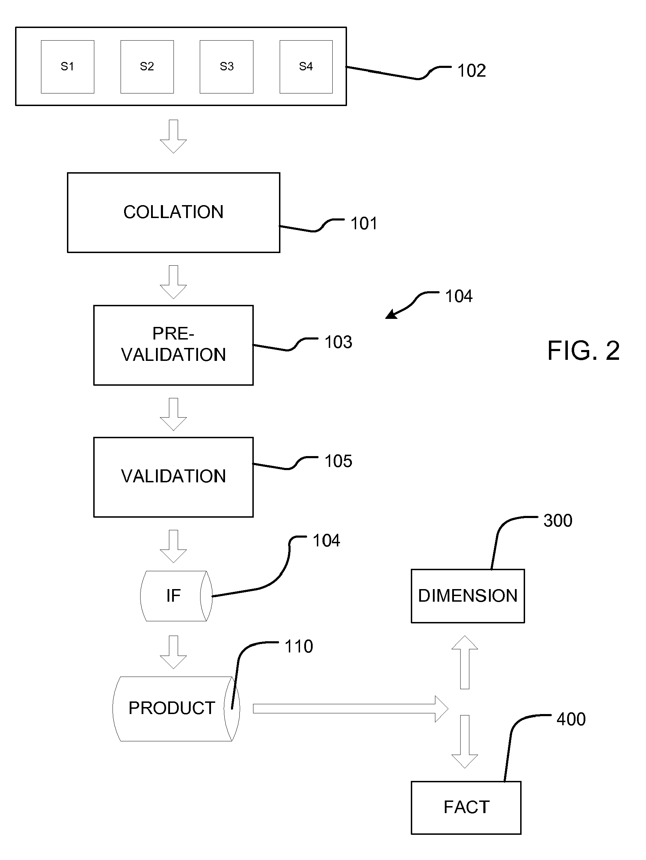

FIG.2 expands on the discussion above, focusing on the data flow into business platform 200. As noted above, data flows from a source database 102 through an ETL module 104, where the data is extracted, transformed, and loaded. As shown here, the ETL process includes modules for collation 101, pre-validation 103, and validation 105. The data needs to be pushed to an interim staging area based on the variable list provided, which will be then pulled by the collation engine. Initially, data is collated, by grouping it into categories based upon managers' needs, as reflected in the structure of business platform 200, rather than the source-oriented structure found in the source database 102. An important point is that source data will most likely originate from several locations, as shown by sources S1, S2, S3, and S4. The sources could be, for example, different branch bank locations, or different business units within various operating locations. Data contained in source database 102 can vary in format, organization, and subject matter, and the data collation engine 101 organizes the data into logically related units for loading into business platform 200.

Further, collation engine 101 can perform certain calculations. Data originating from disparate sources is collected through APIs (Application programming interfaces). The functions performed by the API's are tied to the requirements of business platform 200, and in particular that system's data dictionary (no shown). This requires, as an initial measure, mapping data from the data source to the data dictionary. Directly available data may be loaded directly to the staging area (FIG. 1), but data from multiple systems may require processing by an appropriate calculation algorithm to conform to the data dictionary. It will be understood that such calculations are within the skill of those in the art, once the details of both the source data and business platform 200 are known.

For example, in a number of scenarios, data contained in the source database 102 could be expressed in a number of different formats. Collation engine 101 could have access to various daily transaction data which needs to be converted to account level monthly data. For instance, as a simple example, the tool may look up all the payments made by an account during the month and sum it up to the monthly payment for the account. Data could arrive at collation engine 101 in the form of Excel files, or text files, or any other format. One task that the collation engine could perform is to convert those files into a chosen format for further processing.

Data from source database 102 could be pushed to collation engine 101 as soon as the data is received by source database 102, or it can be pulled - that is, for processing on a periodic basis or for processing when a certain amount of data has been accumulated. Data are combined in a composite pre-validation file for further processing. These and other variations can be appreciated and implemented by those having ordinary skill in the art.

Pre-validation module 103 runs the collated data through a data dictionary. As known, that process ensures that data matches a given set of constraints. Error messages can be identified as appropriate.

Validation engine 105 inspects the data to ensure that content and format are correct for loading into the business platform 200. Here, if problems are encountered, the engine rejects the entire file, loading problematic individual records into a special file for user access, highlighting elements causing rejections. When all records are corrected the user can then push the entire file again. Rejection reports can be generated to identify data items that need correction.

Interface layer 104 receives data from collation engine 101, pre-validation module 103, and validation engine 105, and it holds that data for loading into business platform 200. That loading operation can occur on a scheduled basis, such as daily, weekly, or monthly, or it can occur upon accumulation of a selected amount of data in the interface layer 104.

When data is ready, it is loaded into business platform 200, and specifically into product database 110. There, the data is processed first to the stage area 112 and then to data mart 114 (FIG. 1). Every time a session runs to populate the Stage area table, the previous data in the table is first removed or truncated, and then the new sets of records are inserted. The data is at first read from the respective data source, followed by all calculations and transformations which are then loaded to the respective fact and dimension tables. While loading in to the mart dimension tables, the keys are generated against each unique record and then fact tables looked up on the dimensions applicable and loaded to the respective fact tables. The loading is always done as an insert. The aggregate tables are then created from the fact tables. Operation of both of those elements of a data warehouse is sufficiently well known in the art as to require no further explanation here.

### Data structure

Product database 110 stores data in two types of tables - dimension tables 300 and fact tables 400. Dimensions are attributes by which the business is measured (Measures are the calculated data variables whose values are analyzed by the user), and dimensions should segregate data sets into non-overlapping regions. Dimensions are those parameters with which the measures can be segmented) In a data set that consists of revenue received by branch banks, for example, useful dimensions could be branch locations, dates, revenue amounts, and lines of business. Each of those dimensions operates to "slice and dice" the data set into separate, non-overlapping elements. Fact tables 400, however, contain the measurements, or metrics, of the business process. For example, "$12,000" is a fact, and that fact could fall under the category of a dimension labeled "Revenue." Typically, multiple facts and dimensions are aggregated, so that a fact table could contain an entry such as "Revenue $12,000 for 16^{th} St. Branch on 20 November 2012."

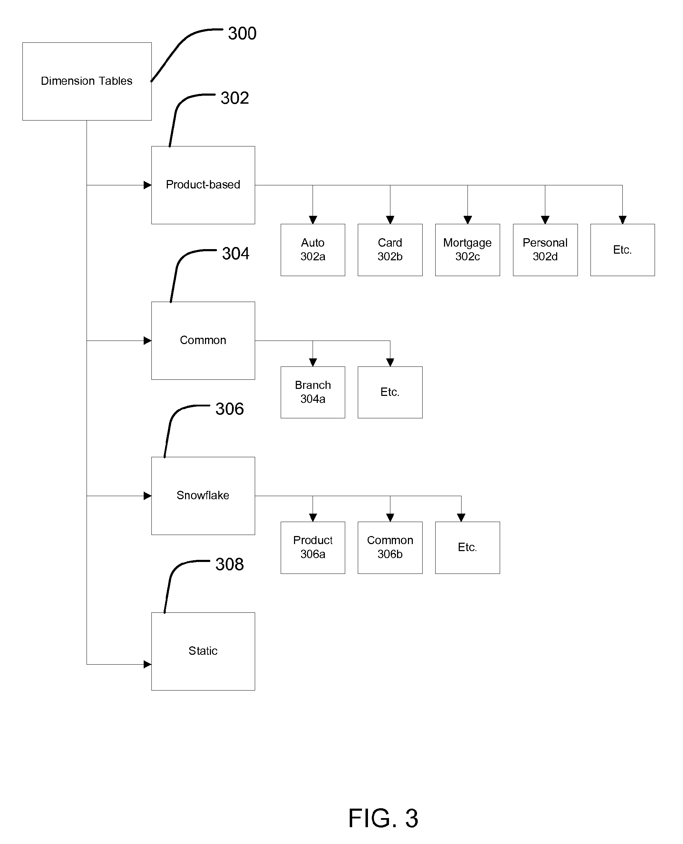

Dimensions 300, shown in detail in FIG. 3, are generally classified into four categories: Product-specific dimensions 302, Common dimensions 304, Snowflake dimensions 306, and Static dimensions 308. Product-specific dimensions 302 refer specifically to a product line, such as automotive loan product dimensions 302a, credit card product dimensions 302b, mortgage dimensions 302c, personal-finance dimensions 302d, and so on. Each of these dimensions relates specifically to a particular type of product. For example, dimensions carried under the category credit card dimensions 302b could be, for example, "Card type," "Credit Limit," and the like. Depending upon the business structure, any number of product-based dimensions may be added. However a base set of reports and alerts based on management IP makes the art immediately useful and productive.

Common dimensions 304 stretch across a number of product categories. For example, "Branch" 304a would be a dimension for all products sold by a given branch, without itself being attached to any individual product.

Snowflake dimensions 306 are dimensions that hold only key information from other dimension tables. One such dimension could hold key information, for example, from Product-Specific tables "Auto_Dealer," "Auto_Model," and "Auto_LoanType." Common Snowflake dimension 306a, which apply to all products, and Product Snowflake dimensions 306b, which are used only for a specific product.

Static dimensions 308 are loaded through static files, of file type .CSV, characterized as being delimited by characters, such as commas, tabs, paragraph marks, or the like. The dimension "Age Band" is a static dimension, for example.

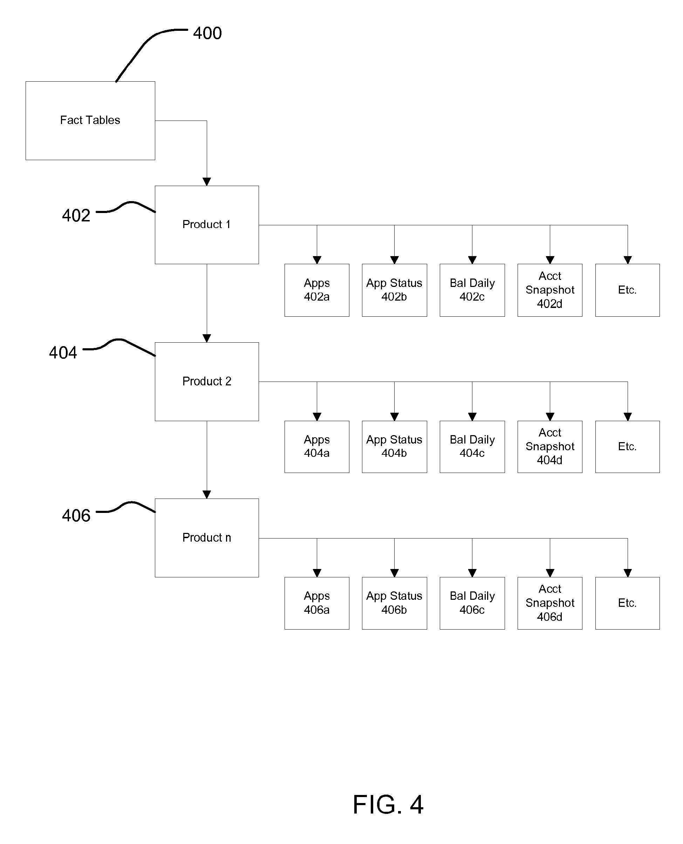

FIG. 4 depicts the detailed structure of fact tables 400. Fact tables can take many forms in various applications, and thus structures different from that depicted here can be employed, as will be understood by those in the art. As noted above, the examples of the present disclosure are focused upon a banking application, and that orientation is reflected in the details structure of Fact tables 400.

As structured here, Fact Tables 400 are organized by products, so that for every product there exist four Fact tables: an Applications table, an Applications Status table, a Daily Account Transaction Snapshot Table., and a Monthly Account Transaction Snapshot table. The Daily Account Transaction Snapshot table contains snapshots of day-end transactional data in each subject areas of interest, including all accounts in each subject area. The Monthly Account Transaction Snapshot table contains snapshots of month-end transactional data in each subject areas of interest, including all accounts in each subject area. The last table is actually an aggregate table, which is a type of fact table summarized to a higher degree of granularity. Thus, for a first product, labeled Product 402, there are four fact tables, Applications table 402a, Application Status table 402b, Daily Balances table 402c, and Account Snapshot table 402d. Each product, from Product 2 through Product n has associated with it the same four Fact tables.

### Alerts and Reports

As noted above, managers face a major challenge in determining exactly when, and to what extent, problems exists and an early warning alert goes through to the relevant person (role based targeted solution), and specifying the reports to which they need to drill down on to identify a particular issue which they need to work on.. Moreover, that challenge is exacerbated because the question of which particular problems are most important to a manager is an issue very much associated with the manager's position in the business. The problems faced by a department head differ significantly from those of importance to a CEO.

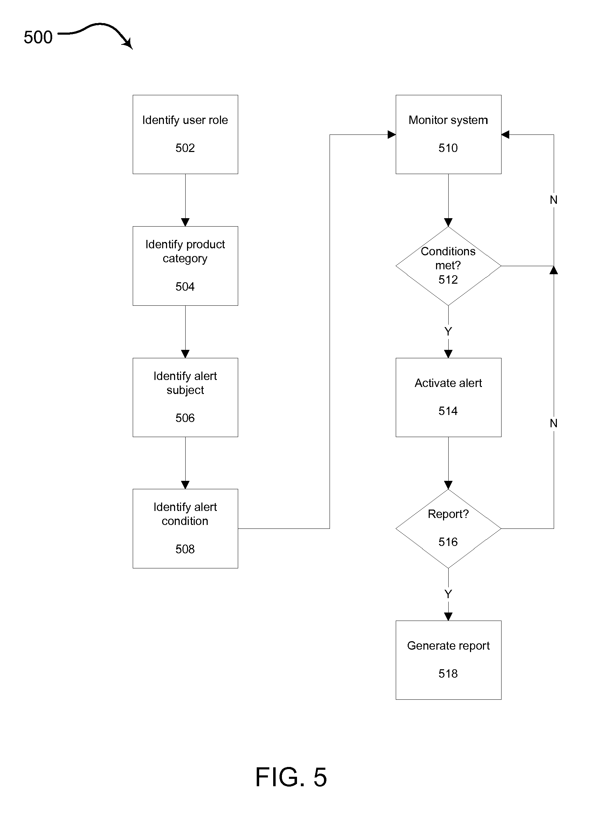

FIG. 5 charts a process 500 for pre-defining and activating a role-based alert process. As was the situation set out above, the present disclosure is addressed particularly to a management solution for the banking industry, and thus the particular examples set out here are attuned to that business. Those in the art will understand that the principles underlying process 500 can be applied to other industries as well, and the level of skill in the art is sufficient to accomplish that task.

Process 500 can be envisioned as occurring in two distinct portions. The first portion is the pre-definition phase, occupying steps 502-508. Those steps thoroughly define the process in terms of the user, the product or product category, the alert subject, and the alert condition. Having established the alert parameters, the process can enter the active phase, steps 510-518, in which the system monitors operations to identify conditions that meet the alert criteria, and when those conditions are met, an alert is issued.

The first step in the definition phase, step 502, identifies the user role. A user's role, as noted above, largely dictates the specific information a user requires to perform her duties. A CEO, for example, needs performance results for an entire organization, requiring integration of data from a number of sources. In a multinational organization, results may be summarized from a variety of organizations, operating in widespread time zones and with different currencies. A department head, on the other hand, requires the same quantity of critical information, but that information will be much more focused. Rather than seeing reports for a week or a month, for example, a department head will seek information for the last shift and the last day. Rather than reviewing revenue for an entire business unit, the department head will look for production totals or revenue generated down to an individual or cell level.

Considerable research must be accomplished, and thought must be given, to defining particular roles and their information needs. This problem has become particularly acute in the modem age of mass communication and instrumentation. The modem manager's problem is not how to obtain more information, but rather how to identify important information from among the flood of data at his fingertips. That level of business analysis must be accomplished to support the implementation of any system such as process 500. In order to focus on details of implementing process 500, it is presumed that business analysts have completed studies on information flow and information requirements within the organization.

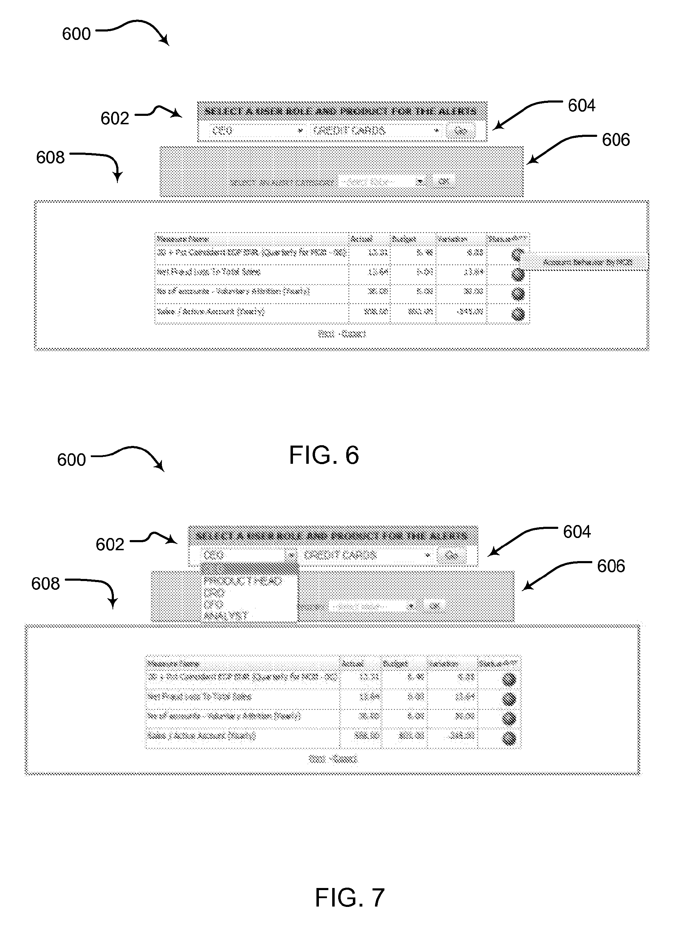

An exemplary embodiment of process 500is shown in the system depicted in FIGS.6-9. Those figures show screenshots of the alert definition portion of a business management platform 200 (FIG. 1). The first such screenshot, FIG. 6, illustrates the screen that would be viewed by a company CEO/CFO/CRO and so on, upon signing on to the alert system. As seen there, alert screen 600 includes three drop-down lists: role selection drop-down list 602, product selection drop-down list 604, and alert category drop-down list 606. In addition, the user views alert display 608, showing all current alert conditions. The following discussion steps through each of those screen portions.

As mentioned above, the first step in process 500, step 502, identifies the user role. On the alert screen 600, as shown in FIG. 7, role selection is accomplished by clicking on the role selection drop-down list 602. That action calls opens the appropriate drop-down list, which shows a selection of roles. Here, the user can select from CEO, Product Head, CRO, CFO, and Analyst. Plainly, these roles do not offer an exhaustive list, and equally plainly, an exhaustive list would be cumbersome to use. Thus, some system of offering an appropriate group of roles would be useful here. In some embodiments, the system can employ other information to determine an approximate role for the present user. These and other methods define the user's job title, and thus the user's role on business platform 200.

Returning to FIG.5, next step 504 moves on to identify the product category. It should be noted, that the specific criteria involved in predefining an alert will differ over various applications. In the banking industry, product categories are good entry points into business data, as those categories differentiate between, for example, retail banking, commercial banking, and the like. In other businesses, different criteria may be important. For example, in some operations, geographic locations may be more important than product categories. It should be noted that the particular category identification is not important, but rather one must identify a category designation particularly suitable to the business at hand.

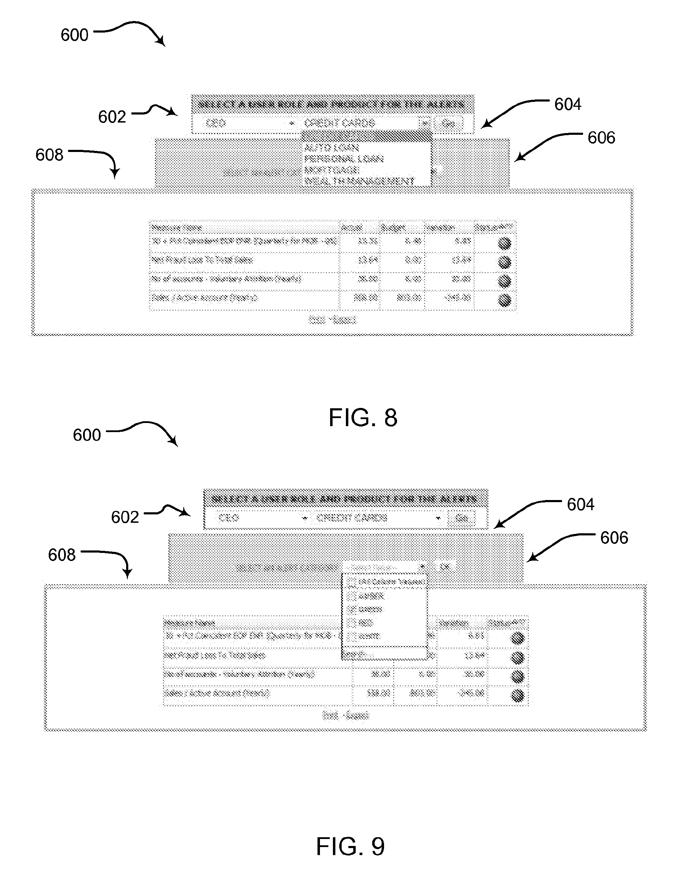

Executing the product category selection is illustrated in FIG. 8. There, the user clicks on the product selection drop-down list 604 to call up a list of product categories. Selections in the illustrated list are Credit Cards, Auto Loan, Personal Loan, Mortgage, and Wealth Management. Those categories separate out lines of business in the banking industry, as identified by the particular system employing this business platform 200. Even within the banking industry, particular companies may well want to alter the product category list to suit their particular circumstances. For example, a bank concentrating on the mortgage business may well cut out the categories of Credit Cards, Auto Loans, Personal Loans, and Wealth Management in favor of, for example, Residential Mortgages, Commercial Mortgages, Securitized Mortgages, and the like.

Returning again to FIG. 5, the system identifies the alert subject in step 506, followed by identifying the alert condition in step 508. The first of these steps must be accomplished beforehand, as the basic subj ect of the alert must be identified by preliminary business analysis. This analysis is part and parcel of the identification of exactly what information is required to make proper decisions at every level of an enterprise. The higher up one moves in an organization, the more difficult this decision becomes, precisely because so much data is available. The second point, identifying the alert condition at step 508, based on management knowledge and skills, also requires some advance planning, because it must be first determined exactly what constitutes good, questionable, and bad performance levels. Moreover, this point of analysis must be ongoing, as performance levels must be continually scrutinized to keep up with changing conditions. As equipment is upgraded, for example, expected performance levels most likely will change. Similarly, if maintenance is deferred in the interest of cutting costs, performance levels must be adapted to that condition.

As seen in FIG. 9, a user can choose a performance level for triggering a given alert. Here the host company employs a color coding scheme, indicating performance levels as amber, green, red, and white. Similar color schemes are in wide use, given the wide association of those colors with particular performance levels. Choice is required, because a user may be interested in knowing whether a given factor is running poorly, while another factor may be identified for alert when performance is good or performance is bad, but not when performance is in the middle. Preferably, a user may select more than one alert level, allowing selection at multiple performance levels.

Step 508 completes the identification phase of process 500. Afterward, the system enters the active phase, consisting of steps 510-518. Step 510 consists of monitoring the system, followed by step 512, determining whether any alert conditions are satisfied. If no condition is met, the system simply loops back to step 510. It can easily be seen that most system operation consists of these two steps. If an alert condition is met however the alert is activated in step 514. That result can be seen in the alert display 608 of FIGS.6-9. As seen there, the alert subject matter is briefly stated, together with a colored circle indicating the status of that alert item.

### Reports

As mentioned earlier, one can recognize that a manager may well desire considerably more information about the alert condition than can be set out in a single, short line. To meet that need, the alert system is integrated with report module 122 (FIG. 1). As a result, if the user desires a report at step 516, she can click on the colored circle at the right end of each item on alert display 608, and that action will generate a report in step 518. By the inclusion of appropriate hyperlinks in the resulting report, the manager can follow a chain of links to obtain as much, or as little, information as she desires.

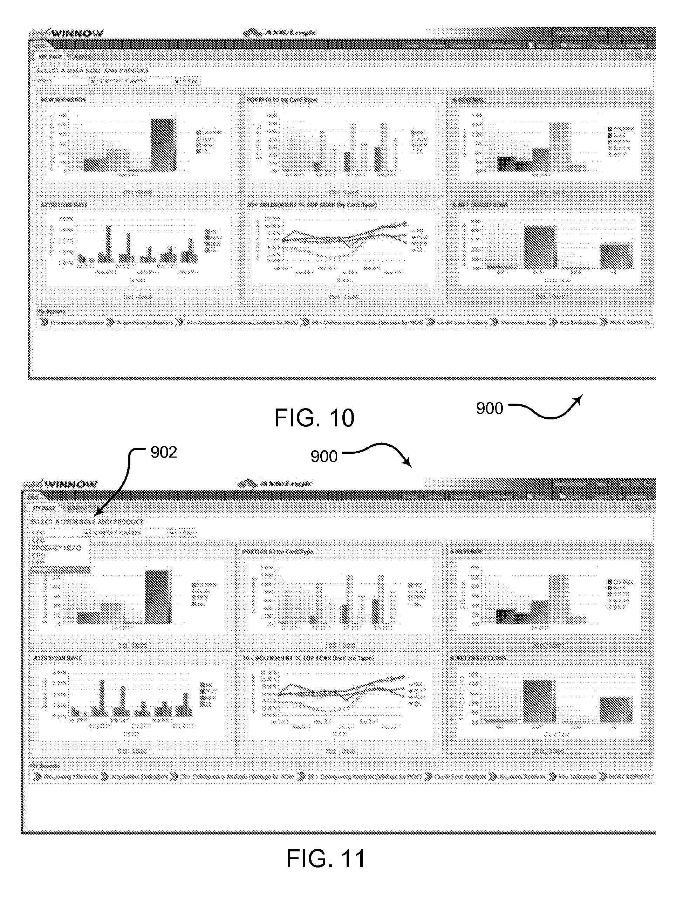

An example of the reports produced by the present disclosure appears in FIGS.10-15. As seen in FIG. 10, the system may employ a user profile to establish a default set of criteria that govern the information displayed when a user first logs onto the system. Here, report screen 900 is automatically generated by the system when a person having the role of "CEO" logs on to report module 122 (FIG.1). There, preset product areas chosen, and one or more specific reports are displayed. In the illustrated example, the user has preset the product area as "CREDIT CARDS" and has selected six predefined reports for display. The generation and use of personal profiles is well known in the art and will not be discussed further here.

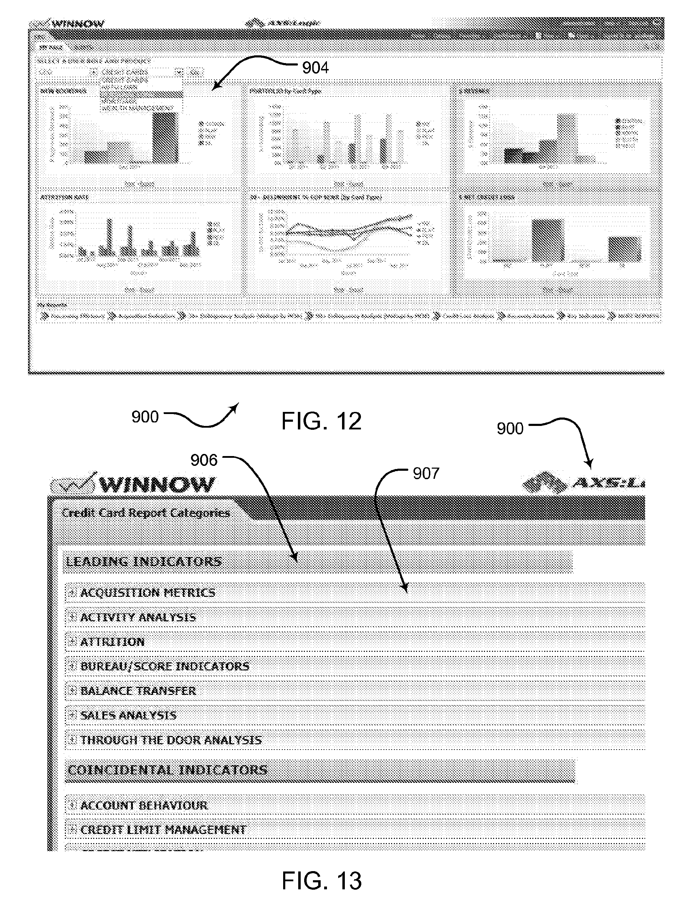

The detailed steps taken by a user to generate selected reports will be covered the following sections. The first step in report generation is role identification, illustrated in FIG.11, where a user selects a role from a drop-down list 902, as was discussed above in connection with alerts. Here, the user is offered choices CEO, PRODUCT HEAD, CRO, CFO, and ANALYST. Similarly, as seen in FIG.12, the user selects a product category from drop-down list 904. Choices displayed here are CREDIT CARDS, AUTO LOAN, PERSONAL LOAN, MORTGAGE, and WEALTH MANAGEMENT. It will be understood that both roles and product selections may be mutually modified. For example, a user's role could limit the range of products offered by drop-down list 904. A mortgage officer, for example, might not be able to view any product other than MORTGAGE.

Within each product area, a number of predefined reports are available to the user. These reports can be grouped in a number of levels, and the system allows a user to proceed hierarchically through the report categories and subjects. For example, and as illustrated in FIG.13, the system can offer categories 906 in several levels. The illustrated example presumes selection of Credit Cards as the product area, and the system offers three top-level categories, LEADING INDICATORS, COINCIDENTAL INDICATORS, and LAGGED INDICATORS, dividing the categories temporally into past, present, and future. The choice of product categories depends upon a thorough knowledge of the particular business. Additionally, report categories can vary by role. While the CEO may be primarily interested in broad, enterprise-wide categories, the national sales manager may wish to see a geographic division, so that top-level categories might be EASTERN REGION, SOUTHERN REGION, and the like.

Top-level categories 906 are followed by hierarchically nested subcategories 907, the levels of nesting being determined solely by the needs of the business. In the illustrated example, the category LEADING INDICATORS is provided with subcategories of Acquisition Metrics, Activity Analysis, Attrition, and so on. It will be noted that subcategory contains and "expand" button to its left, signaling the user that additional subcategories are available for choice. Based upon the structure of a given business, multiple levels of subcategories can be provided.

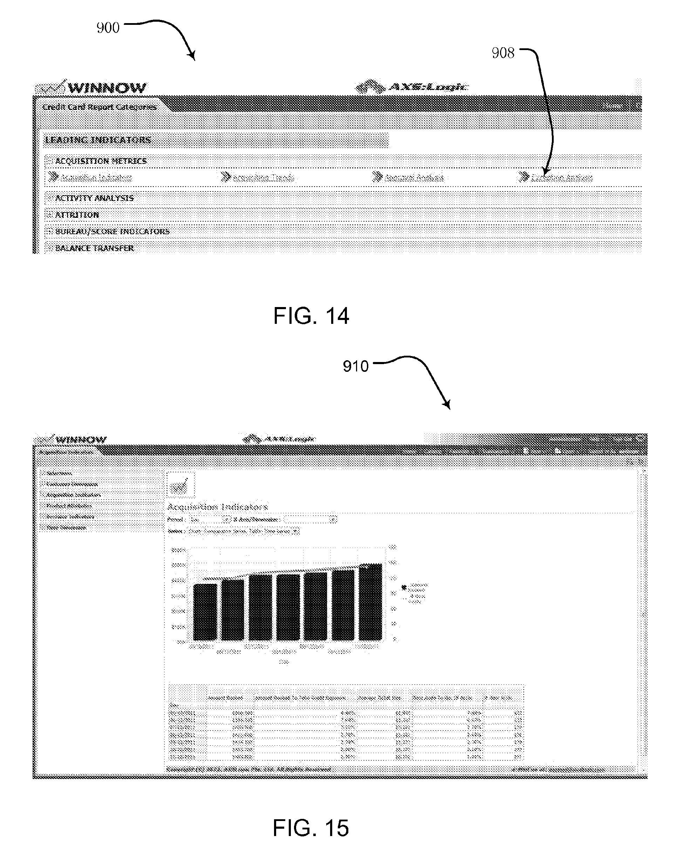

FIG.14 illustrates a situation in which the user has chosen subcategory Acquisition Metrics, which offers the user a choice of four reports 908, entitled Acquisition Indicators, Acquisition Trends, Approval Analysis, and Exception Analysis. As noted above, selection of particular report subjects, as well as report content, results from a detailed study of the business and the needs of particular users.

A resulting generated report 910 can be seen in FIG. 15. This report results from the choice Acquisition Indicators in the screen shown in FIG.14. This report is structure both as a histogram and a data display. Business analysis will reveal user needs for data, as well as appropriate dimensioning measures for the reports. For example, the user of the illustrated chart needs booked amounts displayed in increments of $100,000, with a separate data point for each day. A different business scenario could call for a quantity scaling (y-axis) of an order of magnitude greater or less than shown here. Similarly, time units (x-axis) could be either shorter (such as intraday) or longer (spread over weeks or months).

While it can be appreciated that a user could probably structure each of these reports, as well as determining which categories, subcategories, and individual reports might be needed, the time required for that task would be significant. Time spent on that task, however, is time spent away from the user's primary mission, which calls for analyzing the data and making business decisions, not structuring reports. Thus, providing the user a predefined set of reports covering a wide range of business activities allows the user to concentrate on the data, not the process for displaying the data. The result should be improved decision-making across the business.

In addition, the system provides the user the ability to refine the reports by modifying the x- and y-axis values, as well as the ability to drill down to more granular levels of data. Such capabilities are well known and will not be discussed in detail.

The system allows a user to quickly identify alert conditions and to tie alerts directly to reports. Alert generation is sufficiently direct and straightforward that a user can alter the alert identification in a matter of moments, as necessitated by changing circumstances.

### Conclusion

It will be recognized that the system set out above can be adapted to a variety of circumstances. The details of the embodiments identified in the present disclosure are particularly tied to the banking industry, but those of skill in the art will recognize that the same principles can be applied to a variety of other industries. Basic business analysis can identify the categories of information that are important to managers. Some enterprises, for example, will want to divide information by geographic areas, while others will concentrate on product lines. The system set out here is sufficiently flexible to accommodate a wide variety of business needs, all within the scope of the present disclosure and within the ambit of the claims appended hereto.

## Claims

1. A business management system for managing a consumer financial services business, comprising
A database module, including
one or more dimension tables, each dimension table structured to contain data related to the consumer financial services business, including;
one or more product-specific dimension tables;
one or more common dimension tables;
one or more snowflake dimension tables; and
one or more static dimension tables; and
one or more fact tables, each fact table structured to contain data related to the consumer financial services business, including
one or more application status tables;
one or more application tables;
one or more daily account transaction snapshot tables; and
one or more account transaction snapshot aggregate tables;
an alert module, predefined to alert a user to conditions of importance to a consumer financial services business; and
a report module, predefined to report conditions of importance to a consumer financial services business.

2. A method for generating alerts in the operation of a business management system for managing a consumer financial services business, comprising
predefining business alert conditions, including
identifying user roles, together with critical information required by users in such roles;
identifying product categories involved with the critical information;
identifying subject matter involved with the critical information;
identifying alert conditions regarding the critical information;
monitoring the business management system to determine whether any alert conditions are met;
upon finding that an alert condition is met, activating an alert to notify a user.
upon receiving a request from a user, generating a report linked to the alert.

3. The method of Claim 2, wherein identifying product categories includes identifying a product that is one of credit cards, mortgages, consumer loans, automotive loans, or wealth management.

4. The method of Claim 2, further comprising
predefining reports to report conditions of importance to a consumer financial services business; and
preparing and disseminating reports to users at the users' request.

5. A business management system for managing a consumer financial services business, comprising
an alert module, predefined to alert a user to conditions of importance to a consumer financial services business; and
a report module, predefined to report conditions of importance to a consumer financial services business.
